**Europäisches Patentamt**

**European Patent Office**

**Office européen des brevets**

(19)

(11) Publication number: **0 195 823**
**A1**

# EUROPEAN PATENT APPLICATION

published in accordance with Art. 158(3) EPC

(12)

(21) Application number: **85904858.9**

(22) Date of filing: **20.09.85**

Data of the international application taken as a basis:

(86) International application number: **PCT/JP 85/00527**

(87) International publication number: **WO 86/02184 (10.04.86 86/8)**

(51) Int. Cl.⁴: **G 06 F 13/00, G 06 F 9/06**

(30) Priority: **27.09.84 JP 202437/84**

(43) Date of publication of application: **01.10.86**
**Bulletin 86/40**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KISHI, Hajimu Hino Hirayamadai Jutaku 1104, 7-8, Asahigaoka 6-chome, Hino-shi Tokyo 191 (JP)**
Inventor: **TANAKA, Kunio, 8-13, Tamakawa-cho 5-chome, Akishima-shi Tokyo 196 (JP)**
Inventor: **ONISHI, Yasushi, Tamadaira 3-27, Hino-shi Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **METHOD OF LOADING SYSTEM PROGRAM.**

(57) A method of loading a system program for apparatuses (SYS1, SYS2) that execute predetermined processing controlled by a system program that has been loaded into a memory. According to this loading method, the system program is divided into a plurality of modules (M1 to M4) which are stored on a floppy disc (FLOP); data (CD) are set in advance in ROMs (LROM1, LROM2) so that the capacities of memories (MM1, MM2), to which the system program will be transferred and stored, are confirmed; the memory capacities of the apparatuses (SYS1, SYS2) are confirmed with reference to data (CD) at the time when the system program is being loaded such that a predetermined module is loaded onto the memories (MM1, MM2) based upon the memory capacity; the module (M4) that has not been loaded is then stored as a relocatable module in the memory (MM1) to substitute for an unnecessary module as required, and an execution control table (LAT) is prepared to control the memory position in the memory (MM1) of said relocatable module. When a relocatable module is to be referred to, the memory position is found by using the execution control table and the relocatable module is referred to.

FLP
FLOPPY DISK

SYS1 SYSTEM    SYS2 SYSTEM

## DESCRIPTION

SYSTEM PROGRAM LOADING METHOD

### Technical Field

This invention relates to a method of loading a system program and, more particularly, to a method of loading a system program of an apparatus which performs predetermined processing under the control of a system program loaded in a memory.

### Background Art

An automatic programming system for automatically creating an NC program is constituted by an input/output unit, such as a graphic display unit, a printer and a magnetic cassette tape or floppy disc, in addition to the main frame, and is very useful owing to its ability to create NC programs simply, rapidly and accurately. The main frame of the automatic programming system is constituted by a computer, in which software (a system program) for NC program creation is stored beforehand in a main internal memory. If a group of data (a part program) specifying a tool path created in a predetermined automatic programming language (APT or FAPT) are subsequently inputted in accordance with predetermined rules, a host processor program within the system program automatically calculates tool path coordinate values using the abovementioned group of data, creates an NC program conforming to an EIA or ISO code and outputs the program. Accordingly, in automatic programming, first a predetermined system program from an external storage medium is stored in the main memory device of the automatic programming system and then automatic programming processing is executed.

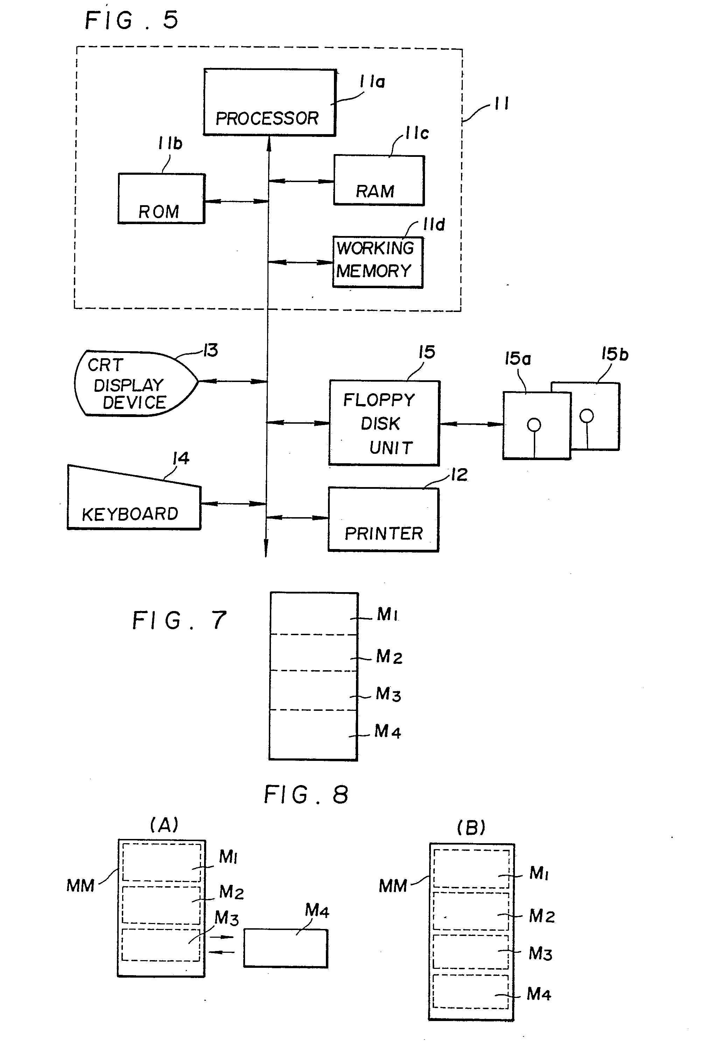

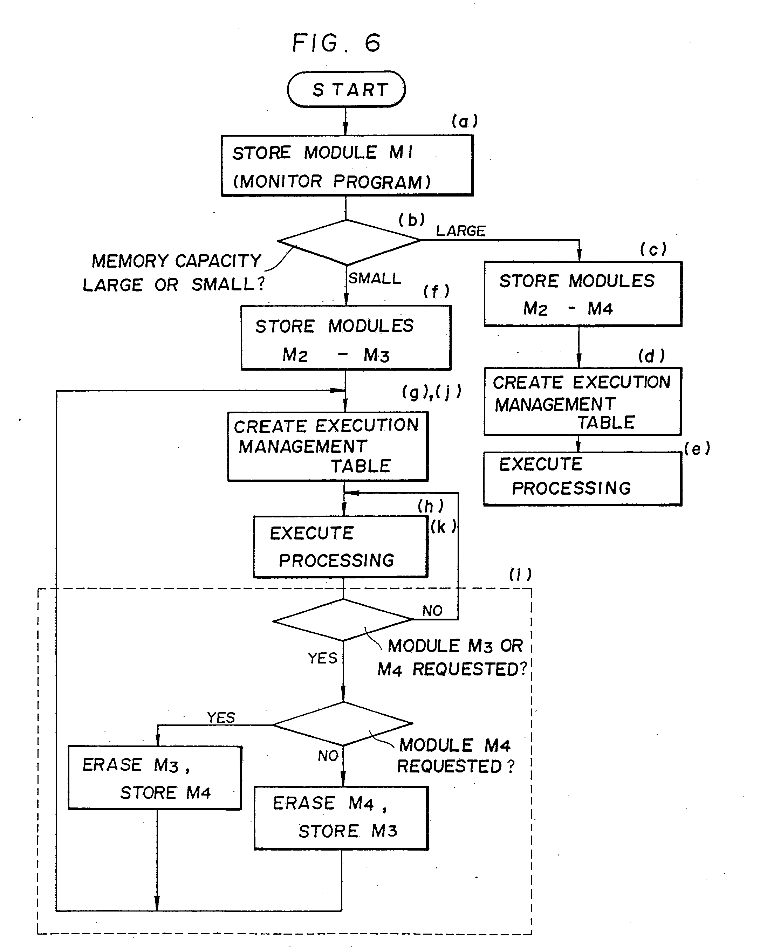

There are cases where the storage capacity of the main memory device (hereafter referred to simply as a memory) differs depending upon the automatic programming system. Consequently, if the system program is composed of e.g. a plurality of modules M1 - M4 as shown in Fig. 7, only modules M1 - M3 can be stored in a memory MM [see Fig. 8(A)] in case of a system having a small storage capacity. Where the system has a large storage capacity, on the other hand, all of the modules M1 - M4 can be stored in the memory MM [see Fig. 8(B)]. In other words, the prescribed module M4 sometimes can or cannot be stored, depending upon the size of the storage capacity. It should be noted that module M1 is, for example, a monitor program, module M2 a language translator, module M3 a first postprocessor module, and module M4 a second postprocessor module.

If the second post processor module M4 is necessary for the case shown in Fig. 8(A), the monitor program (module M1) dislodges the first postprocessor module M3 from the memory MM and stores the second postprocessor module M4 in its place. Thereafter, processing is executed by referring to the entries (e.g. subroutines) of this module. If the first

0195823

-3-

postprocessor module M3 agains becomes necessary, the substitution is made in the same fashion and processing is continued.

For the case shown in Fig. 8(B), all of the modules are stored in the memory and, hence, module substitution processing is unnecessary.

Further, where the storage capacity is small, as shown in Fig. 8(A), the position at which the module M4 is stored differs from that at which the same module is stored when the storage capacity is large, as shown in Fig. 8(B). Consequently, processing executed when referring to the module M4 differs depending upon the size of the storage capacity.

Thus, as set forth above, the processing method differs depending upon the size of the storage capacity. In the prior art, therefore, a requisite system program is created for each system that has a different storage capacity and a floppy disc storing the system program is prepared for each such system.

However, preparing a floppy disc for every system that has a different storage capacity is undesirable as it involves a greater amount of labor. Moreover, an increased number of floppy discs is a drawback since this involves more complicated management.

Accordingly, an object of the present invention is to provide a system program loading method in which only one type of floppy disc need be prepared irrespective of memory capacity.

## Disclosure of the Invention

The present invention relates to a method of loading a system program of an apparatus which performs predetermined processing under the control of a system program loaded in a memory. The loading method includes dividing a system program into a plurality of modules and storing the modules on a floppy disc, presetting data, which are for indicating the capacity of a memory to which the system program is to be transferred for storage, in the system beforehand, ascertaining the memory capacity of the system by referring to the data when the system program is loaded, loading prescribed modules into the memory based on the memory capacity, storing an unloaded module as a relocatable module in the memory later in place of a subsequently unneeded module as the occasion demands, creating an execution management table for managing a storage location at which the relocatable module is stored in the memory, and in a case where the relocatable module is referred to, obtaining a storage location using the execution management table to refer to the relocatable module.

The system program is divided into a plurality of modules, the modules are stored on a floppy disc, and the data, which are for indicating the capacity of the main memory device (memory) to which the system program is to transferred for storage, are set in the system beforehand. For example, the data indicative of the memory capacity are stored in a ROM storing a loading program.

When a system program loading request is generated after the introduction of power under these conditions, the loading program first stores a monitor program (module) in the memory. Thereafter, the monitor program refers to the data and predetermined modules are loaded in the memory. More specifically, if the memory capacity is large, all modules are loaded in the memory. If the memory capacity is small, all modules are not loaded; instead, a predetermined module is left out and the others are loaded in the memory. The module not loaded is stored as a relocatable module in the memory later in place of a subsequently unneeded module as the occasion demands.

The monitor program creates the execution management table for managing the storage location at which the relocatable module is stored in the memory. In a case where the relocatable module is referred to, the storage location is obtained by using the execution management table and entries (e.g. subroutines) contained in the relocatable module are referred to by using this storage location. It should be noted that a table indicating a corresponding relationship between the name of each subroutine contained in a relocatable module and the storage location thereof in the memory is created as the execution management table.

Brief Description of the Drawings

Fig. 1 is a view for describing the present invention;

Fig. 2 is a view for describing an execution management table according to the present invention;

Fig. 3 is a view for describing another execution management table according to the present invention;

Fig. 4 is an external view of an automatic programming system to which the present invention can be applied;

Fig. 5 is a block diagram of the automatic programming system;

Fig. 6 is a flowchart for describing processing according to the present invention;

Fig. 7 is a view for describing the configuration of a system program; and

Fig. 8 is a view for describing the drawbacks of the prior art.

Best Mode for Carrying Out the Invention

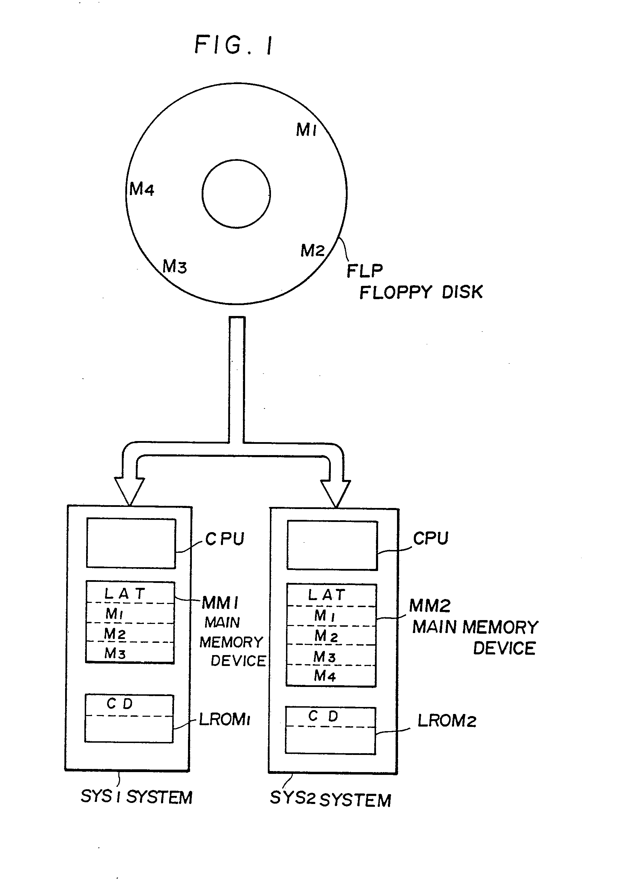

Fig. 1 is a schematic view of the present invention. A system program is stored on a floppy disc FLP. The system program has a module M1 (monitor program), a module M2 (language translator), a module M3 (first postprocessor module) and a module M4 (second postprocessor module).

In each of systems SYS1, SYS2, data CD indicative of the storage capacities of main memory devices (memories) MM1, MM2 are set by pins on a printed circuit boards, not shown, or these data are stored in

-7-

read-only memories LROM1, LROM2 for loading program storage.

When the system program is loaded, first the module M1 (monitor program) is stored in the main memory devices (MM1, MM2) by a loading program.

Next, the monitor program ascertains the storage capacities by referring to the data CD set on the printed circuit boards or in the read-only memories (LROM1, LROM2) and stores prescribed modules in the main memory devices. More specifically, if the memory storage capacity is large (which is the case for system SYS2), then the monitor program loads the remaining modules M2 - M4 in the memory MM2. If the memory storage capacity is small (which is the case for system SYS1), then the monitor program does not load all of the modules. Instead, the prescribed module M4 is left out and the remaining modules M2 - M3 are loaded in the memory MM1.

The module M4 not loaded in system SYS1 is stored later as a relocatable module in the memory MM1 in place of a subsequently unneeded module (e.g. M3) as the occasion demands.

In parallel with the foregoing loading processing, the monitor program creates, at a predetermined location in the main memory devices (MM1, MM2), an execution management table LAT for managing the storage location of each module in the main memory devices (MM1, MM2).

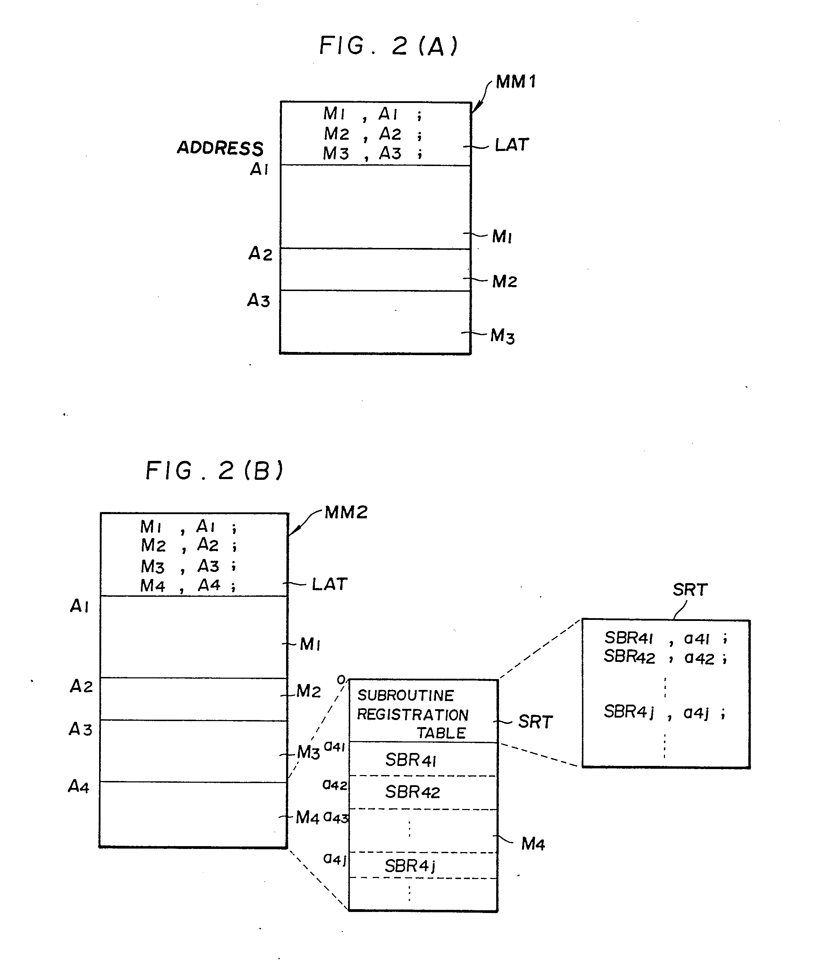

For example, in the case of system SYS1 having the small storage capacity, assume that module M1 is stored from memory address A1 in the main memory device MM1, module M2 is stored from memory address A2, and module M3 is stored from memory address A3, as illustrated in Fig. 2(A). In such case, the execution management table LAT will be

M1,A1; M2,A2; M3,A3;

In the case of system SYS2 having the large storage capacity, assume that module M1 is stored from memory address A1 in the main memory device MM2, module M2 is stored from memory address A2, module M3 is stored from memory address A3, and module M4 is stored from memory address A4, as illustrated in Fig. 2(B). In such case, the execution management table LAT will be

M1,A1; M2,A2; M3,A3; M4,A4;

Each module has a number of subroutines. For instance, module M4 has subroutines SBR41, SBR42, .... SBR4i,..., as shown in Fig. 2(B). A subroutine registration table SRT is placed at the beginning of each module, and the table is followed by various subroutines SBRij (i = 1 - 4, j = 1, 2, ...). The subroutine registration table SRT exhibits the correlation between the name of each subroutine and the starting address of the subroutine. The starting address referred to here is a relative address when the starting position of a module is taken as the reference. Accordingly, if the relative address of each subroutine SBR4j (j = 1, 2, ...) of the module M4 is $a_{4j}$ (j = 1, 2, ...), then the subroutine registration table SRT of module M4 is constituted by the following correspondence table:

SBR41, $a_{41}$; SBR42, $a_{42}$; ... SBR4j, $a_{4j}$, ...

Accordingly, if the subroutine SBR4j of module M4 is requested by the monitor program in actual processing, then a processor CPU first reads the starting address A4 of the module M4 from the execution management table LAT, thereafter reads the relative address $a_{4j}$ of the subroutine SBR4j from the subroutine registration table SRT of module M4j, reads the subroutine SBR4j from the memory address $(A4+a_{4j})$, and executes processing.

Though the foregoing discussion deals solely with module M4, the same will hold for the other modules.

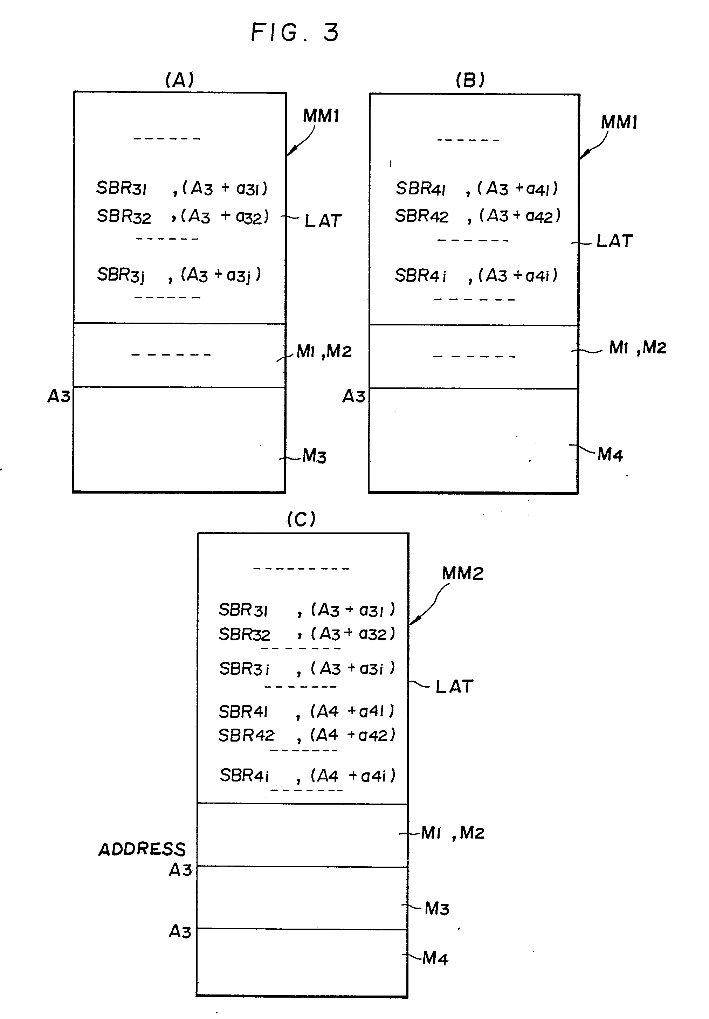

Further, the execution management table LAT is described above as being composed of corresponding relationships between the modules and their starting addresses. However, it is also permissible for the table to be composed of corresponding relationships between the names of the subroutines contained in the modules and the storage locations of these subroutines in the main memory device. Fig. 3 if a view for describing such a management table.

Assume that the relative address of each subroutine SBR3j (j = 1, 2, ...) in module M3 is $a_{3j}$ (j = 1, 2, ...), that the relative address of each subroutine SBR4j (j = 1, 2, ...) in module M4 is $a_{4j}$ (j = 1, 2, ...), and that module M3 is stored from the address A3 of main memory device MM1 in the small-capacity system SYS1. The execution management table LAT in such case will be as shown in Fig. 3(A), in which the starting address of each subroutine SBR3j is the sum of the starting address A3 of module M3 and the relative address $a_3$ of the subroutine. Likewise, assume that the module M4 is stored from the address A3 of main memory device MM1 in the small-capacity system SYS1. The execution management table LAT in such case will be as shown in Fig. 3(B). Further, if the module M3 is stored from the address A3 of main memory device MM2 and the module M4 is stored from the address A4 in the large-capacity system SYS2, then the execution management table will be as shown in Fig. 3(C).

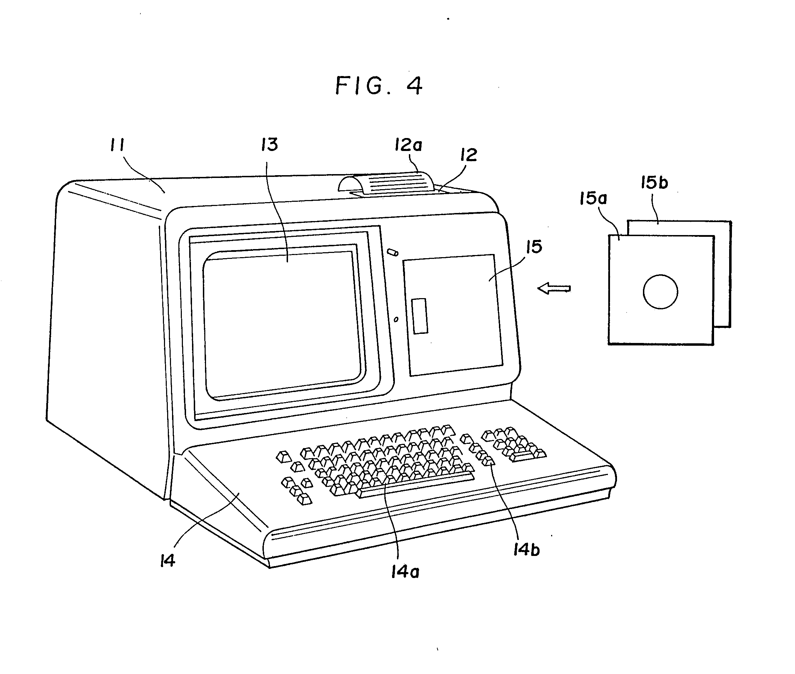

Fig. 4 is an external view of an automatic programming system to which the present invention can be applied, and Fig. 5 is a block diagram of the automatic programming system.

A main frame 11 has an upper side provided with a printer 12 and a front side provided with a CRT display device 13. Disposed in front of the CRT display 13 is a keyboard 14 on which there are provided an array of keys 14a such as character keys, numeric keys and function keys. Disposed at the side of the CRT display 13 is a floppy disc unit 15. Numeral 12a denotes a recording paper on which printing is performed by the

0195823

-11-

printer 12. Numerals 15a, 15b denote floppy discs.

The main frame 11 is constituted by a microcomputer and, as shown in Fig. 5, includes a processor 11a, a ROM 11b, a RAM 11c and a working memory 11d. The processor 11a corresponds to the processor CPU in Fig. 1, the ROM 11b corresponds to the read-only memories LROM1, LROM2 in Fig. 1, and the RAM 11c corresponds to the main storage devices MM1, MM2 in Fig. 1. The ROM 11b stores the data CD indicative of storage capacity, as well as the loading program. Under the control of this loading program, a system program (monitor program) is read from a floppy disc and loaded in the RAM 11c, after which another system program is loaded in the RAM 11c by the monitor program. The processor 11a executes processing under the control of the system program, causes the CRT display device 13 to display the results of processing and various instructions, executes predetermined processing based on data and commands entered from the keyboard 14, creates an NC program and either prints out the program via the printer 12 or records the program on a floppy disc.

Let us now describe the method of the present invention in accordance with Fig. 1 and the processing flowchart of Fig. 6. The execution management table LAT will be described as being composed of corresponding relationships between subroutines and starting addresses (see Fig. 3).

When the system is manufactured, data CD indicative of the memory capacities of the main memory devices (memories ... Ml, M2) are set by pins on printed circuit boards or in the loading program storage memories (LROM1, LROM2). For a case where systems having different memory capacities are of two types only, namely a large-capacity system and a small-capacity system, by way of example, pins are set to their on or off positions or "1" or "0" is stored in the loading program storage memories in advance.

(a)  In response to a system program loading request, such as by turning on a power supply, the processor CPU loads the monitor program (module Ml) into the main memory devices (MM1, MM2) from the floppy disc FLP under the control of the loading program.

(b)  Next, the monitor program refers to the set data CD to ascertain the system memory capacity (large or small).d

(c)  If the memory capacity is large (CD = 1), then the processor CPU, which is under the control of the monitor program, loads all of the remaining modules M2 - M4 stored on the floppy disc FLP into the main memory device.

(d)  Next, the monitor program creates the execution management table LAT [see Fig. 3(C)] indicating the corresponding relationships between the storage locations of the subroutines contained in each module and the names of the subroutines, and stores the table in the main memory device at a predetermined location thereof.

(e) If the system program (all modules) is stored in the main memory device MM2 as a result of the foregoing processing, then automatic programming processing is executed thereafter under the control of the system program. If a prescribed subroutine contained in each module becomes necessary, the monitor program refers to the execution management table LAT to obtain the storage location of the subroutine and then reads the subroutine from this location.

(f) If the memory capacity is small, then the monitor program stores the modules M2 - M3 is the main memory device and does not store the relocatable module M4 in this main memory device.

(g) Next, the monitor program creates an execution management table LAT [see Fig. 3(A)] and stores this table in the main memory device MM1. Note that since the module M4 is not stored in the main memory device MM1 in the initial loading operation when the memory capacity is small, the fact that module M4 is not stored in the main memory device is recorded in the execution management table.

(h) Thereafter, predetermined automatic programming processing is executed based on the system program stored in the main memory device MM1.

(i) When the module M4 (the second postprocessor module) is requested in the automatic programming processing, the module M4 is stored at the location storing the module M3 (the first postprocessor module).

(j)  The monitor program then creates a new execution management table LAT [see Fig. 3(B)] in the main memory device MM1.

(k)  Thereafter, processing is performed based on the system program stored in the main memory device MM1.  Note that if the module M3 is requested, the module M3 is stored in place of module M4 and the execution management table is revised.

In the case described above, the present invention is applied to an automatic programming system. However, the invention is not limited to such a system.

According to the present invention as described above, the arrangement is such that a system program is divided into a plurality of modules which are then stored on a floppy disc, data indicating the capacity of a memory to which the system program is to be transferred for storage are set in the system beforehand, the memory capacity of the system is ascertained by referring to the data when the system program is loaded, prescribed modules are loaded into the memory based on the memory capacity, an unloaded module is stored as a relocatable module in the memory in place of an unneeded module as the occasion demands, an execution management table for managing a storage location at which the relocatable module is stored in the memory is created, and in a case where the relocatable module is referred to, a storage location is obtained using the execution management table and the module is referred to by using the storage location. Accordingly, only one type of floppy disc for system program storage need be provided irrespective of the size of the memory capacity, labor can be reduced and floppy disc management facilitated.

0195823

-16-

CLAIMS:

1.  A method of loading a system program of an apparatus which performs predetermined processing under the control of a system program loaded in a memory, characterized by dividing a system program into a plurality of modules and storing the modules on a floppy disc, presetting data, which are for indicating the capacity of said memory to which the system program is to be transferred for storage, in the system beforehand, ascertaining the memory capacity of the system by referring to said data when the system program is loaded, loading prescribed modules into the memory based on said memory capacity, storing an unloaded module as a relocatable module in the memory in place of an unneeded module as the occasion demands, creating an execution management table for managing a storage location at which said relocatable module is stored in said memory, and in a case where the relocatable module is referred to, obtaining a storage location by using said execution management table to refer to said relocatable module.

2.  A method of loading a system program according to claim 1, characterized by storing a loading program in a ROM of the system, storing said data in said ROM, storing a monitor program, which is one module, in the memory by the loading program, and loading the prescribed modules into the memory by said monitor program upon referring to said data.

3.  A method of loading a system program according to claim 1, characterized by creating a table, which indicates a corresponding relationship between a name of each subroutine contained in the relocatable module and a storage location of said subroutine in the memory, as the execution management table.

FIG. 1

FIG. 2 (A)

FIG. 2 (B)

# FIG. 3

### (A)

- - - - - -                                    MM1

SBR31  , $(A_3 + a_{31})$

SBR32  , $(A_3 + a_{32})$                      LAT

- - - - -

SBR3j  , $(A_3 + a_{3j})$

- - - - - -

- - - - - -                                    M1 , M2

A3

                                               M3

### (B)

- - - - -                                      MM1

SBR41  , $(A_3 + a_{41})$

SBR42  , $(A_3 + a_{42})$                       LAT

- - - - -

SBR4i  , $(A_3 + a_{4i})$

- - - - - -

- - - - - -                                    M1 , M2

A3

                                               M4

### (C)

- - - - - - - -                                MM2

SBR31  , $(A_3 + a_{31})$

SBR32  , $(A_3 + a_{32})$

- - - - -

SBR3i  , $(A_3 + a_{3i})$

- - - - -

SBR41  , $(A_4 + a_{41})$

SBR42  , $(A_4 + a_{42})$                       LAT

- - - - -

SBR4i  , $(A_4 + a_{4i})$

- - - - -

- - - - - -                                    M1 , M2

ADDRESS

A3

                                               M3

A3

                                               M4

# FIG. 4

FIG. 5

PROCESSOR  11a

11b  ROM

11c  RAM

11d  WORKING MEMORY

11

CRT DISPLAY DEVICE  13

15  FLOPPY DISK UNIT

15a  15b

14  KEYBOARD

12  PRINTER

FIG. 7

M1
M2
M3
M4

FIG. 8

(A)

MM

M1
M2
M3  M4

(B)

MM

M1
M2
M3
M4

FIG. 6

START

(a) STORE MODULE MI
(MONITOR PROGRAM)

(b) MEMORY CAPACITY
LARGE OR SMALL?

LARGE →

(c) STORE MODULES
M2 - M4

(d) CREATE EXECUTION
MANAGEMENT
TABLE

(e) EXECUTE
PROCESSING

SMALL

(f) STORE MODULES
M2 - M3

(g),(j) CREATE EXECUTION
MANAGEMENT
TABLE

(h) (k) EXECUTE
PROCESSING

(i)

MODULE M3 OR
M4 REQUESTED? — NO

YES

MODULE M4
REQUESTED ?

YES →

NO

ERASE M3,
STORE M4

ERASE M4,
STORE M3

# INTERNATIONAL SEARCH REPORT

0195823

International Application No. PCT/JP85/00527

## I. CLASSIFICATION OF SUBJECT MATTER (if several classification symbols apply, indicate all) ¹

According to International Patent Classification (IPC) or to both National Classification and IPC

Int. Cl⁴   G06F 13/00, 9/06

## II. FIELDS SEARCHED

| Minimum Documentation Searched ⁴ | |
|---|---|
| Classification System | Classification Symbols |
| IPC | G06F 9/06, 12/00, 13/00 |

| Documentation Searched other than Minimum Documentation to the Extent that such Documents are Included in the Fields Searched ⁵ | |
|---|---|
| Jitsuyo Shinan Koho | 1955 – 1985 |
| Kokai Jitsuyo Shinan Koho | 1971 – 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP, A, 56-67427 (Ricoh Company, Ltd.), 6 June 1981 (06. 06. 81), Column 2, lines 7 to 19, column 5, line 7 to column 7, line 13 (Family: none) | 1, 2, 3 |

* Special categories of cited documents: ¹⁶
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search ² | Date of Mailing of this International Search Report ² |
|---|---|
| December 2, 1985 (02.12.85) | December 9, 1985 (09.12.85) |
| International Searching Authority ¹ | Signature of Authorized Officer ¹⁸ |
| Japanese Patent Office | |

Form PCT/ISA/210 (second sheet) (October 1981)